# EUROPÄISCHE PATENTSCHRIFT

(11) **EP 2 805 182 B1**
(45) Veröffentlichungstag und Bekanntmachung des Hinweises auf die Patenterteilung: **10.10.2018**
(21) Anmeldenummer: 12808728.5
(22) Anmeldetag: 07.12.2012
(51) Int. Cl.: G01S 7/529, H03M 1/18

(54) **VERFAHREN UND UMFELDERFASSUNGSVORRICHTUNG ZUR BESTIMMUNG DER POSITION UND/ODER DER BEWEGUNG MINDESTENS EINES OBJEKTES IN DER UMGEBUNG EINES FAHRZEUGES MITTELS VON AN DEM OBJEKT REFLEKTIERTEN AKUSTISCHEN SIGNALEN**
METHOD AND ENVIRONMENT DETECTION DEVICE FOR DETERMINING THE POSITION AND/OR THE MOVEMENT OF AT LEAST ONE OBJECT IN THE ENVIRONMENT OF A VEHICLE BY MEANS OF ACOUSTIC SIGNALS REFLECTED BY THE OBJECT
PROCÉDÉ ET DISPOSITIF DE DÉTECTION D'ENVIRONNEMENT POUR DÉTERMINER LA POSITION ET/OU LE MOUVEMENT D'AU MOINS UN OBJET SITUÉ DANS L'ENVIRONNEMENT D'UN VÉHICULE AU MOYEN DE SIGNAUX ACOUSTIQUES RÉFLÉCHIS SUR L'OBJET

(30) Priorität: 19.01.2012 DE 102012200729
(43) Veröffentlichungstag der Anmeldung: 26.11.2014
(73) Patentinhaber: Robert Bosch GmbH, 70442 Stuttgart (DE)
(72) Erfinder: Karl, Matthias, D-76275 Ettlingen (DE)
(86) Internationale Anmeldenummer: PCT/EP2012/074819
(87) Internationale Veröffentlichungsnummer: WO 2013/107565

(56) Entgegenhaltungen:
- WO-A1-2011/058527
- DE-A1- 19 804 957
- US-A1- 2010 305 449
- US-B1- 6 563 761

## Beschreibung

### Bereich der Erfindung

Die vorliegende Erfindung betrifft ein Verfahren und eine Umfelderfassungsvorrichtung zur Bestimmung der Position und/oder der Bewegung mindestens eines Objektes in der Umgebung mindestens eines Bewegungshilfsmittels, insbesondere eines Fahrzeuges mittels von empfangenen, an dem Objekt reflektierten und als Echosignale bezeichneten Signalen. Auch betrifft die Erfindung ein Fahrzeug mit der erfindungsgemäßen Vorrichtung.

### Stand der Technik

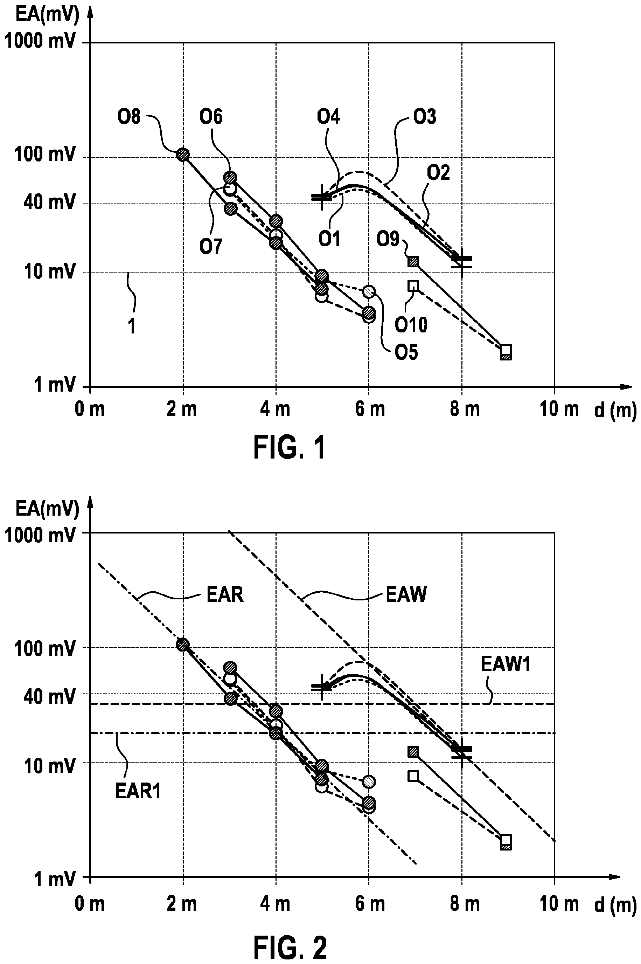

Zur akustischen Umfelderfassung von Fahrzeugen werden derzeit üblicherweise Systeme im Ultraschallbereich, insbesondere pulsweise messende Systeme, verwendet. Dabei werden typischer Weise alle 10 ms bis 300 ms über einen Elektro-Akustik-Wandler akustische Pulse bei ca. 50 kHz ausgesandt. Aus der Pulslaufzeit zu dem sendenden und zu den nicht sendenden Wandlern wird auf den Objektabstand im Raum geschlussfolgert. Messungen belegen, was aus der Literatur her bekannt ist, dass mit zunehmender Echolaufzeit die Signalstärke abnimmt. Das wird auch in der Figur 1 verdeutlicht.

In der Figur 1 ist die Echoamplitude EA von akustischen Echosignalen, die akustische Signale repräsentieren, die an verschiedenen Objekten O1, O2, O3, O4, O5, O6, O7, O8, O9, O10 reflektiert worden sind, in Abhängigkeit vom Objektabstand d dargestellt. Die Echoamplitude EA wurde in Millivolt und der Objektabstand in Metern angegeben.

Die Objekte O1 bis O4 sind Wände und werden durch Kreuze dargestellt, die Objekte O5 bis O8 sind Röhren und werden durch Kreise dargestellt und die Objekte O9 und O10 sind Fahrzeuge (BMW3) und werden durch Quadrate dargestellt. Alle Objekte O1 bis O10 werden jeweils mittels von akustischen Sendepulsen mit einer jeweiligen Sendepulsdauer von 12 ms, 6ms, 1 ms, 0,3 ms, 12 ms, 6, ms, 1 ms, 0,3 ms, 6 ms und 1 ms detektiert. Die angegebenen Sendepulsdauern sind für die Abhängigkeit der Echosignalstärke von der Echolaufzeit vernachlässigbar.

Zur Vereinfachung des Verständnisses der Figur 1 wurden auch die Gitternetzlinien 1 eingezeichnet.

Zur Auflösung aller möglichen Echosignalstärken ist die Verwendung eines hohen Amplitudenbereichs von z.B. 1 mV bis 2000 mV, der einem Dynamikumfang von ca. 2¹¹ entspricht, notwendig. Will man beispielsweise das an einem Rohr O5, O6, O7, O8 reflektierte Signal erfassen, das bezüglich eines Mittelwertes sowohl ins Positive als auch ins Negative schwingt, ist ein Dynamikumfang von 2¹² und deswegen auch die Verwendung eines aufwändigen 12Bits-Wandlers beziehungsweise einer entsprechend rauscharmen Signalverarbeitungstechnik, erforderlich. Mit der eingesetzten Signaldynamik steigt auch der zugehörige Verarbeitungsaufwand, wie zum Beispiel der Rechenaufwand.

Aus dem Stand der Technik ist weiterhin bekannt, dass heute verfügbare digitale Rechenkerne zumeist zumindest über einen Dynamikumfang von 16 Bits verfügen. Darüber hinaus wird hier die Größe der Rechenkapazität *C* = *f · n* definiert, wobei n für den Dynamikumfang und f für die Verarbeitungsfrequenz einer Signalverarbeitungseinrichtung steht.

Ferner ist aus dem Dokument DE 10 2008 054 789 A1 die Verwendung einer laufzeitabhängigen Verstärkung der empfangenen Echosignale bei pulsweise messender Umfeldsensorik bekannt. In demselben Dokument ist weiterhin beschrieben, dass zusätzlich, wenn die Dynamik der laufzeitabhängigen Verstärkung nicht genügt, um sowohl Kleinsignale als auch Großsignale auf die Übertragungsstärke zu komprimieren, eine Amplitudenkompression des Echosignals erfolgen kann, um Signalstärken, die für eine weitere Übertragung zu groß sind, zu verarbeiten. Des Weiteren ist dem Fachmann bekannt, dass dieses Verfahren in äquivalenter Weise auch bei pulsweise messender Umfeldsensorik mit Signalfrequenzen außerhalb des Ultraschallbereichs, wie zum Beispiel im Hörbereich des Menschen angewendet, werden kann. Weiterhin ist aus dem Stand der Technik bekannt, wie Informationen über den Verlauf einer laufzeitabhängigen Dämpfung eines Übertragungskanals gewonnen werden können.

Die DE 198 04 957 A1 beschreibt ein Verfahren zur Ermittlung des Abstandes zwischen einem Abstandssensor und einem Objekt mittels geeigneter Signale, die mittels eines Senders des Abstandssensors ausgesendet, an dem Objekt reflektiert und mittels eines Empfängers des Abstandssensors empfangen wurden. Dabei werden empfangene Echosignale mittels einer mit dem fortdauernden Zeitablauf steigenden Verstärkung verstärkt und mittels eines Analog-Digital-Wandlers in ein digitales Signal umgesetzt. Das digitalisierte Signal wird dann zur Ermittlung des Abstandes zwischen dem Abstandssensor und dem Objekt mittels einer Auswerteschaltung, die einen Mikrokontroller und einen Mikroprozessor umfasst, verarbeitet. Bei dem Verfahren können mehrere Abstandssensoren eingesetzt werden. Die von den mehreren Abstandssensoren stammenden digitalen Signale werden dabei mittels derselben Auswerteschaltung verarbeitetet.

### Offenbarung der Erfindung

Erfindungsgemäß wird ein Verfahren zur Bestimmung der Position und/oder der Bewegung eines Objektes in der Umgebung eines Bewegungshilfsmittels, insbesondere eines Fahrzeuges, mittels von empfangenen an dem Objekt reflektierten Signalen, im Folgenden als Echosignale bezeichnet, bereitgestellt.

Dabei werden die empfangenen Echosignale jeweils mittels einer von der Laufzeit des entsprechenden Echosignals abhängigen Verstärkung verstärkt und verstärkte Echosignale mehrerer Messkanäle jeweils in ein wertmäßig und/oder zeitmäßig diskretisiertes Messsignal mit einem in Abhängigkeit von einer vorliegenden Umgebungs- und/oder Fahrsituation vorgegebenen, ersten Dynamikumfang (m) gewandelt. Ferner werden die jeweils den ersten Dynamikumfang (m) aufweisenden Messsignale auf einen im Vergleich zu dem ersten Dynamikumfang größeren, zweiten Dynamikumfang einer Verarbeitungseinrichtung derart abgebildet, dass sie mittels der Verarbeitungseinrichtung zumindest zeitweise gleichzeitig verarbeitet werden.

Erfindungsgemäß wird weiterhin eine Umfelderfassungsvorrichtung zur Bestimmung der Position und/oder der Bewegung mindestens eines Objektes in der Umgebung eines Bewegungshilfsmittels, insbesondere eines Fahrzeuges, mittels von empfangenen, an dem Objekt reflektierten Signalen, im Folgenden als Echosignale bezeichnet, bereitgestellt. Dabei umfasst die Umfelderfassungsvorrichtung eine oder mehrere Verstärkereinrichtungen, die jeweils dazu ausgebildet sind, die empfangenen Echosignale jeweils mittels einer von der Laufzeit des entsprechenden Echosignals abhängigen Verstärkung zu verstärken. Die Umfelderfassungsvorrichtung ist weiter dazu ausgebildet, verstärkte Echosignale mehrerer Messkanäle, insbesondere mittels mindestens eines Schwellenwertschalters und/oder mindestens eines Analos-Digital-Wandlers, in ein jeweiliges wertmäßig und/oder zeitmäßig diskretisiertes Messsignal mit einem vorgegebenen, ersten Dynamikumfang (m) zu wandeln, den erste Dynamikumfang (m) in Abhängigkeit von einer vorliegenden Umgebungs- und/oder Fahrsituation vorzugeben, und die jeweils den ersten Dynamikumfang aufweisenden Messsignale mittels einer Verarbeitungseinrichtung mit einem im Vergleich zu dem ersten Dynamikumfang größeren, zweiten Dynamikumfang zumindest zeitweise gleichzeitig zu verarbeiten.

Die Unteransprüche zeigen bevorzugte Weiterbildungen der Erfindung.

Bei dem erfindungsgemäßen Verfahren wird insbesondere nach dem Aussenden eines Messpulses die Verstärkung der Empfangssignale kontinuierlich oder quasikontinuierlich zumindest zeitweise verändert. Anders ausgedrückt, werden die empfangenen Echosignale mittels einer laufzeitabhängigen Verstärkung verstärkt. Die verstärkten Echosignale werden insbesondere mittels eines Schwellenwertschalters jeweils in ein zeitkontinuierliches, wertdiskretes Signal gewandelt, das vorzugsweise durch Abtasten mittels eines Analog-Digital-Wandlers (A/D-Wandlers) zusätzlich zur Wertdiskretisierung auch noch einer Zeitdiskretisierung unterzogen wird. Das diskretisierte Signal weist den Dynamikumfang m auf und die Signale mehrerer Messkanäle werden in einer Verarbeitungstechnik, die einen größeren Dynamikumfang n als der Dynamikumfang m eines Messsignals umfasst, parallel verarbeitet.

Mit anderen Worten wird erfindungsgemäß eine Architektur bereitgestellt, mit der insbesondere die Signale der pulsweise arbeitenden akustischen Umfeldsensorik effizient verarbeitet werden können.

Der Vorteil der Parallelisierung liegt darin, dass mit einer Operation gleichzeitig mehrere Signale bearbeitet werden können.

Erfindungsgemäß wird ferner bevorzugt beim Vorliegen einer mittels mindestens eines Messsignals bestimmten Kollisionsgefahr zwischen dem Bewegungshilfsmittel, insbesondere dem eigenen Fahrzeug, und dem Objekt eine Warnung an den Fahrer ausgegeben und/oder in die Bewegungshilfsmitteldynamik, insbesondere in die Fahrzeugdynamik eingegriffen und/oder mindestens ein Mittel zur Senkung von Unfallfolgen aktiviert.

Erfindungsgemäß wird bevorzugt die Position und/oder die Bewegung von Objekten in der Umgebung von Bewegungshilfsmitteln wie Krankenfahrstühle, Segways, Fahrräder, Elektroautos, andere Fahrzeuge wie Autos, Busse und Lastkraftwagen mittels pulsförmig ausgesendeter Schallsignale bestimmt. Dabei wird der Bediener des Bewegungshilfsmittels über den Abstand, die Position und/oder die Bewegungsrichtung der in der Umgebung des Bewegungshilfsmittels befindlichen Objekten mittels optischer und/oder akustischer Mittel informiert. Ferner können die Bewegungsrichtungen durch Lenken und/oder die Geschwindigkeit durch Bremsen verändert werden. Auch können Mittel zur Senkung von Unfallfolgen, wie beispielsweise Gurtstraffer und/oder Fensterheber und/oder Airbags und/oder Mittel zum Anheben der Motorhaube aktiviert werden.

Bei der Erfindung wird der erste Dynamikumfang m situationsabhängig, das heißt in Abhängigkeit von einer vorliegenden Umgebungs- und/oder Fahrsituation, variiert.

Wenn beispielsweise in der Beobachtungsrichtung eines Sensors eine besonders kritische Situation vermutet wird, wird dort die Auflösung m₁ erhöht, während die Auflösung m₂ bei einem Sensor, in dessen Beobachtungsrichtung weniger wichtige Ereignisse vermutet werden, zeitgleich verringert wird.

Ein anderes Beispiel dafür ist, dass die Abtastfrequenz, die der Häufigkeit entspricht, mit der ein geänderter Wert auftreten kann, variiert wird. Als Stellgröße zur Veränderung kann einerseits die Eigengeschwindigkeit eines Fahrzeugs und/oder die erkannte Relativgeschwindigkeit zu einem Objekt und/oder der Objektabstand und/oder die Art des Objektes sein, das zum Beispiel eine ebene Wand oder ein Buschwerk sein kann.

Bei einer besonders vorteilhaften Ausführungsform der Erfindung wird der Zeitverlauf der laufzeitabhängigen Verstärkung mittels einer Regelung eingestellt. Auch kann der Zeitverlauf der laufzeitabhängigen Verstärkung derart eingestellt werden, dass eine einen Amplitudenverlauf von geeigneten Kalibrierechosignalen abschätzende Kalibrierkurve mittels der laufzeitabhängigen Verstärkung auf eine zeitinvariante, einem gleichbleibenden Signalstärkenwert entsprechende Gerade abgebildet wird. Dadurch wird die Auswertung von Echosignalen, die mittels einer solchen laufzeitabhängigen Verstärkung verstärkt worden sind, deutlich vereinfacht.

Vorzugsweise wird der Zeitverlauf der laufzeitabhängigen Verstärkung in Abhängigkeit von einer vorliegenden Umgebungs- und/oder Fahrsituation und/oder in Abhängigkeit von einem Funktionszustand, insbesondere einem Verschmutzungszustand, mindestens eines empfangenden Elektro-Akustik-Wandlers eingestellt.

Mit anderen Worten, es wird der Zeitverlauf der zeitveränderlichen Verstärkung an eine Umgebungssituation beziehungsweise an einen Wandlerzustand, insbesondere an einen Wandlerverschmutzungszustand, mittels einer üblichen, einfach realisierbarer Kanalschätzung angepasst.

Ferner wird erfindungsgemäß ein Fahrzeug mit einer erfindungsgemäßen Umfelderfassungsvorrichtung bereitgestellt.

### Kurze Beschreibung der Zeichnungen

Nachfolgend werden Ausführungsbeispiele der Erfindung unter Bezugnahme auf die begleitenden Zeichnungen im Detail beschrieben. In der Zeichnungen ist:
- Figur 1: der Verlauf der Amplitude der aus den Reflektionen akustischer Signale an mehreren teilweise unterschiedlichen Objekte stammenden Echoamplituden in Abhängigkeit von dem Objektabstand nach dem Stand der Technik;
- Figur 2: der in Abhängigkeit von dem Objektabstand dargestellte Verlauf von Kalibrierkurven, die jeweils einen Amplitudenverlauf von Kalibrierechosignalen abschätzen und der in Abhängigkeit von dem Objektabstand dargestellte Verlauf der jeweils mit einer erfindungsgemäßen, laufzeitabhängigen Verstärkung beaufschlagten Kalibrierkurven, die zusätzlich zum dem von dem Objektabstand abhängigen Verlauf der Echoamplituden aus der Figur 1 dargestellt worden sind,
- Figur 3: eine schematische Darstellung für die Zuordnung von 5 Messkanälen mit einem Dynamikumfang von jeweils 6 Bits auf eine Verarbeitungsbreite von 32 Bits, und
- Figur 4: ein schematisches Blockschaltbild einer erfindungsgemäßen Umfelderfassungsvorrichtung nach einer ersten Ausführungsform der Erfindung.

### Ausführungsformen der Erfindung

In der Figur 2 wird die Echoamplitude EA derselben akustischen Echosignale wie die gemäß Figur 1, die die akustischen Signale repräsentieren, die an den Objekten O1, O2, O3, O4, O5, O6, O7, O8, O9, O10 reflektiert worden sind, in Abhängigkeit vom Objektabstand d dargestellt. Die Echoamplitude EA wurde in Millivolt und der Objektabstand d in Metern angegeben Zur Vereinfachung der Darstellung wurden die Objekte O1 bis O10 nicht mehr explizit gekennzeichnet.

In der Figur 2 ist auch der in Abhängigkeit von dem Objektabstand dargestellte Verlauf von zwei Kalibrierkurven EAW und EAR dargestellt, die jeweils einen Amplitudenverlauf von Kalibrierechosignalen abschätzen. Beide Kalibrierkurven EAW und EAR sind in diesem Fall linear.

Dabei wurde für die Eichlinie bzw. Kalibrierlinie, die den Amplitudenverlauf von Eichechosignalen bzw. Kalibrierechosignalen abschätzt, die aus Reflektionen an den Wänden O1 bis O4 stammen, die Strich-Strich-Linie EAW verwendet. Weiterhin wurde für die Kalibrierlinie, die den Amplitudenverlauf von Kalibrierechosignalen abschätzt, die aus Reflektionen an den Röhren O5 bis O8 stammen, die Strich-Punkt-Linie EAR verwendet.

Anhand der in der Figur 2 eingetragenen Linien EAW und EAR wird die Wirkungsweise der laufzeitabhängigen Verstärkung deutlich.

Die Kalibrierkurven EAW beziehungsweise EAR wurden für eine Variation des Objektabstandes d über seinen gesamten Wertebereich dargestellt. In der Praxis sind diese von d abhängigen Verläufe der Linien EAW, EAR nicht Geraden sondern stattdessen etwas komplexer, selbst wenn der Objektabstand d entlang der Achse der empfangenden Sensoren variiert wird. Für das Prinzip der Parallelverarbeitung spielt dieses Phänomen aber keine Rolle, sobald der Verlauf bekannt ist. Aus der Literatur ist bekannt, dass der Verlauf solcher Linien EAW, EAR vom Klima, wie Luftfeuchte, Temperatur und Luftdruck abhängt. Daher werden bei fehlenden Klimainformationen, wie z.B. bei fehlenden Angaben über die Luftfeuchte, Schätzer verwendet.

Erfindungsgemäß wird der Zeitverlauf der laufzeitabhängigen Verstärkung in einem jeweiligen Messzyklus derart eingestellt, dass die Kalibrierkurven EAW, EAR, die jeweils einen Amplitudenverlauf von geeigneten Kalibrierechosignalen in einem entsprechenden Messzyklus abschätzen, jeweils mittels der entsprechenden laufzeitabhängigen Verstärkung auf eine von dem Objektabstand d unabhängigen, einem gleichbleibenden Signalstärkenwert entsprechende Gerade EAW1, EAR1 abgebildet werden. Dabei verlaufen die Linien EAW1 und EAR1 als Geraden parallel zur der Abszisse d, was die Auswertung von mittels einer solchen laufzeitabhängigen Verstärkung verstärkten Echosignalen deutlich vereinfacht.

Anhand der Beziehungen zwischen den in der Figur 2 dargestellten Linien EAW und EAR kann festgestellt werden, dass der Dynamikunterschied zwischen der Echosignalstärke der am stärksten reflektierenden Objekte, die die Wände O1 bis O4 sind, und der Echosignalstärke der eher weniger stark reflektierenden Objekte, die die Röhre O5 bis O8 sind, sich nur um den Faktor von etwa 26, das heißt um weniger als 2⁵, unterscheidet. Wird beispielsweise sicherheitshalber die Amplitudenauflösung um weitere 2 Bits erhöht und ein weiteres Bit zur Vorzeichendarstellung investiert, so genügt eine Auflösung von 8 Bits und weniger, wenn die erfindungsgemäße laufzeitabhängige Verstärkung, mittels der eine gleichbleibende Signalstärke der verstärkten Echosignale erreicht wird, optimal an die Ausbreitungssituation angepasst ist.

Da bei der Umfelddetektion stets die Signale von mehreren Sensoren zeitgleich beziehungsweise quasizeitgleich auszuwerten sind und die heute übliche Rechenbreite n von digitalen Signalverarbeitungseinrichtungen zumeist 16 Bits und größer beträgt, können die Signale mehrerer Sensorkanäle parallel verarbeitet werden, wenn die einzelnen Kanäle auf die Breite der Recheneinrichtung n abgebildet (gemapt) werden.

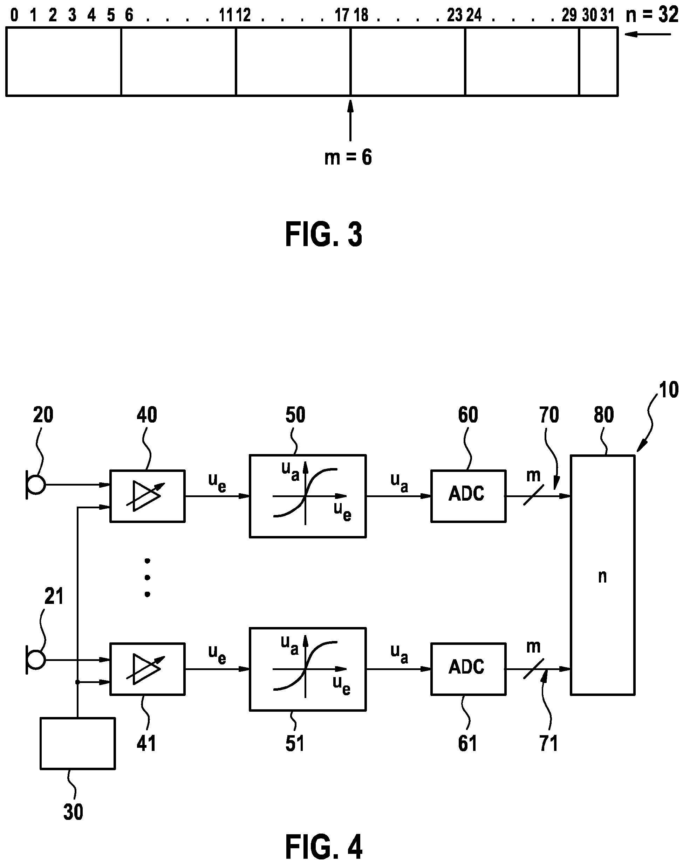

Die Figur 3 zeigt eine schematische Darstellung für die Zuordnung von 5 Messkanälen mit einem Dynamikumfang von jeweils 6 Bits auf eine Verarbeitungsbreite von 32 Bits.

In der Figur 3 sind oben die Nummern 0,..., 31 der 32 Ziffernstellen dargestellt. Bei einem Dynamikumfang von m = 6 Bits benötigt jeder Kanal je 6 Ziffernstellen. In dem in der Figur 3 dargestellten Beispiel sind jeweils 2 Ziffernstellen frei.

Der Vorteil der Parallelisierung liegt darin, dass mit einer Operation gleichzeitig mehrere Signale bearbeitet werden. Da viele Prozessoren besonders leicht eine byteweise Unterscheidung der Daten gestattet, eignet sich besonders eine Zuweisung von je m = 8 Bitstellen für einen Kanal.

Bei manchen bekannten Auswertungen ermöglicht die Parallelisierung eine effiziente Verarbeitung. Bei einer solchen Auswertungsart sind sehr viele Additionen und Subtraktionen möglich. Achtet man beim Design der Rechenoperationen darauf, dass es zwischen den Kanälen nicht zu Überträgern oder Übersprechern kommt, kann mit einem Operationsschritt der über die n Stellen breiten Variable bei dem in der Figur 3 dargestellten Beispiel gleichzeitig der Wert von 5 Kanälen ausgewertet werden.

In Kombination mit amplitudenkomprimierenden Verstärkern kann die pro Kanal erforderliche Signaldynamik auf 4 Bits einschließlich des Vorzeichens reduziert werden.

In der Figur 4 ist ein schematisches Blockschaltbild einer erfindungsgemäßen Umfelderfassungsvorrichtung 10 nach einer ersten Ausführungsform der Erfindung dargestellt.

In der Figur 4 sind die empfangenden Akustik-Elektro-Wandler 20, 21 einschließlich der erforderlichen Anpassung und/oder Filterung und/oder Vorverstärkung schematisch als Mikrofonsymbole dargestellt. Ihnen folgen die auf den Sendezeitpunkt mittels des von der Einrichtung 30 erzeugten SYNC-Signals synchronisierbaren Verstärker 40, 41, die eine einstellbare Verstärkung aufweisen. Denen folgen die Verstärker 50, 51 mit jeweils einer nichtlinearen Kennlinie ua(ue), die so gestaltet sind, dass laute Signale eine geringere Verstärkung erfahren als leise Signale. Anschließend findet eine Wertdiskretisierung und in diesem Fall durch den Einsatz der Analog-DigitalWandler 60, 61 auch eine Zeitdiskretisierung statt. Abschließend werden die einzelnen Kanäle 70, 71 für die schnellere Weiterverarbeitung in mindestens einer nachfolgenden Recheneinheit mit einem Dynamikumfang von n Bits gemäß dem erfindungsgemäßen Grundgedanken parallelisiert.

Neben der voranstehenden schriftlichen Offenbarung wird hiermit zur weiteren Offenbarung der Erfindung ergänzend auf die Darstellung in den Figuren 1 bis 4 Bezug genommen.

## Patentansprüche

1. Verfahren zur Bestimmung der Position und/oder der Bewegung eines Objektes (O1, O2, O3, O4, O5, O6, O7, O8, O9, O10) in der Umgebung eines Bewegungshilfsmittels mittels von empfangenen an dem Objekt (O1,...,O10) reflektierten Signalen, im Folgenden als Echosignale bezeichnet, wobei die empfangenen Echosignale jeweils mittels einer von der Laufzeit des entsprechenden Echosignals abhängigen Verstärkung verstärkt werden, **dadurch gekennzeichnet, dass** verstärkte Echosignale mehrerer Messkanäle (70, 71) jeweils in ein wertmäßig und/oder zeitmäßig diskretisiertes Messsignal mit einem in Abhängigkeit von einer vorliegenden Umgebungs- und/oder Fahrsituation vorgegebenen, ersten Dynamikumfang (m) gewandelt werden, und die jeweils den ersten Dynamikumfang (m) aufweisenden Messsignale auf einen im Vergleich zu dem ersten Dynamikumfang (m) größeren, zweiten Dynamikumfang (n) einer Verarbeitungseinrichtung (80) derart abgebildet werden, dass sie mittels der Verarbeitungseinrichtung (80) zumindest zeitweise gleichzeitig verarbeitet werden.

2. Verfahren nach Anspruch 1, **dadurch gekennzeichnet, dass** der Zeitverlauf der laufzeitabhängigen Verstärkung mittels einer Regelung eingestellt wird und/oder der Zeitverlauf der laufzeitabhängigen Verstärkung derart eingestellt wird, dass eine einen Amplitudenverlauf von geeigneten Kalibrierechosignalen abschätzende Kalibrierkurve (EAW, EAR) mittels der laufzeitabhängigen Verstärkung auf eine zeitinvariante, einem gleichbleibenden Signalstärkenwert entsprechende Gerade (EAW1, EAR1) abgebildet wird und/oder der Zeitverlauf der laufzeitabhängigen Verstärkung in Abhängigkeit von einer vorliegenden Umgebungs- und/oder Fahrsituation und/oder in Abhängigkeit von einem Funktionszustand, insbesondere einem Verschmutzungszustand, eines oder mehrerer empfangenden Akustik-Elektro-Wandler (20, 21) eingestellt wird.

3. Verfahren nach einem der vorangehenden Ansprüchen, **dadurch gekennzeichnet, dass** beim Vorliegen einer mittels mindestens eines Messsignals bestimmten Kollisionsgefahr zwischen dem Bewegungshilfsmittels und dem Objekt (O1,..., O10) eine Warnung an den Fahrer ausgegeben wird und/oder in die Bewegungshilfsmitteldynamik, insbesondere in die Fahrzeugdynamik, eingegriffen wird und/oder eines oder mehrere Mittel zur Senkung von Unfallfolgen aktiviert werden.

4. Umfelderfassungsvorrichtung (10) zur Bestimmung der Position und/oder der Bewegung mindestens eines Objektes (O1,...,O10) in der Umgebung eines Bewegungshilfsmittels mittels von empfangenen, an dem Objekt (O1,...,O10) reflektierten Signalen, im Folgenden als Echosignale bezeichnet, wobei die Umfelderfassungsvorrichtung (10) eine oder mehrere Verstärkereinrichtungen (40, 41, 50, 51) umfasst, die jeweils dazu ausgebildet sind, die empfangenen Echosignale jeweils mittels einer von der Laufzeit des entsprechenden Echosignals abhängigen Verstärkung zu verstärken, **dadurch gekennzeichnet, dass** die Umfelderfassungsvorrichtung (10) dazu ausgebildet ist, verstärkte Echosignale mehrerer Messkanäle (70, 71) insbesondere mittels mindestens eines Schwellenwertschalters und/oder mindestens eines Analos-Digital-Wandlers (60, 61), in ein jeweiliges wertmäßig und/oder zeitmäßig diskretisiertes Messsignal mit einem vorgegebenen, ersten Dynamikumfang (m) zu wandeln, den erste Dynamikumfang (m) in Abhängigkeit von einer vorliegenden Umgebungs- und/oder Fahrsituation vorzugeben, und die jeweils den ersten Dynamikumfang (m) aufweisenden Messsignale mittels einer Verarbeitungseinrichtung (80) mit einem im Vergleich zu dem ersten Dynamikumfang (m) größeren, zweiten Dynamikumfang (n) zumindest zeitweise gleichzeitig zu verarbeiten.

5. Umfelderfassungsvorrichtung (10) nach Anspruch 4, **dadurch gekennzeichnet, dass** die Verstärkereinrichtung (40, 41, 50, 51) eine Regelungseinrichtung umfasst, die dazu ausgebildet ist, den Zeitverlauf der laufzeitabhängigen Verstärkung mittels einer Regelung einzustellen und/oder die Verstärkereinrichtung (40, 40, 50, 51) ausgebildet ist, den Zeitverlauf der laufzeitabhängigen Verstärkung derart einzustellen, dass mittels der laufzeitabhängigen Verstärkung eine Abbildung einer einen Amplitudenverlauf von geeigneten Kalibrierechosignalen abschätzenden Kalibrierkurve (EAW, EAR) auf eine zeitinvariante, einem gleichbleibenden Signalstärkenwert entsprechende Gerade (EAW1, EAR1) erfolgt und/oder der Zeitverlauf der laufzeitabhängigen Verstärkung in Abhängigkeit von einer vorliegenden Umgebungs- und/oder Fahrsituation und/oder in Abhängigkeit von einem Funktionszustand, insbesondere einem Verschmutzungszustand, mindestens eines empfangenden Akustik-Elektro-Wandlers (20, 21) einzustellen.

6. Umfelderfassungsvorrichtung (10) nach einem der Ansprüche 4 oder 5, die dazu ausgebildet ist, beim Vorliegen einer mittels mindestens eines Messsignals bestimmten Kollisionsgefahr zwischen dem Bewegungshilfsmittel, insbesondere dem eigenen Fahrzeug, und dem Objekt (O1,..., O10) eine Warnung an dem Fahrer auszugeben und/oder in die Bewegungshilfsmitteldynamik, insbesondere in die Fahrzeugdynamik einzugreifen und/oder mindestens ein Mittel zur Senkung von Unfallfolgen zu aktivieren.

7. Fahrzeug mit einer Umfelderfassungsvorrichtung (10) nach einem der Ansprüchen 4 bis 6.

## Claims

1. Method for determining the position and/or movement of an object (O1, O2, O3, O4, O5, O6, O7, O8, O9, O10) in the surroundings of a mobility aid by means of received signals reflected from the object (01, ..., 010), subsequently referred to as echo signals, wherein the received echo signals are each amplified by means of a gain dependent on the delay of the applicable echo signal, **characterized in that** amplified echo signals of multiple measurement channels (70, 71) are each converted into a measurement signal, which is discretized in terms of value and in terms of time, having a first dynamic range (m) that is prescribed on the basis of a present ambient and/or driving situation, and the measurement signals each having the first dynamic range (m) are mapped onto a second dynamic range (n), which is larger in comparison with the first dynamic range (m), of a processing device (80) such that they are at least intermittently processed at the same time by means of the processing device (80).

2. Method according to Claim 1, **characterized in that** the time profile of the delay-dependent gain is adjusted by means of a control and/or the time profile of the delay-dependent gain is adjusted such that a calibration curve (EAW, EAR) estimating an amplitude profile of suitable calibration echo signals is mapped by means of the delay-dependent gain onto a time-invariant straight line (EAW1, EAR1) consistent with a constant signal strength value, and/or the time profile of the delay-dependent gain is adjusted on the basis of a present ambient and/or driving situation and/or on the basis of an operational state, in particular a soiling state, of one or more receiving acousto-electric transducers (20, 21) .

3. Method according to either of the preceding claims, **characterized in that** the presence of a risk of collision, determined by means of at least one measurement signal, between the mobility aid and the object (O1, ..., 010) results in a warning being output to the driver and/or action being taken in the mobility aid dynamics, in particular in the vehicle dynamics, and/or one or more means for decreasing consequences of accidents being activated.

4. Environment sensing apparatus (10) for determining the position and/or the movement of at least one object (O1, ..., 010) in the surroundings of a mobility aid by means of received signals reflected from the object (01, ..., 010), subsequently referred to as echo signals, wherein the environment sensing apparatus (10) comprises one or more amplifier devices (40, 41, 50, 51) that are each configured to amplify the received echo signals in each case by means of a gain dependent on the delay of the applicable echo signal, **characterized in that** the environment sensing apparatus (10) is configured to convert amplified echo signals of multiple measurement channels (70, 71) into a respective measurement signal, which is discretized in terms of value and/or in terms of time, having a prescribed, first dynamic range (m) in particular by means of at least one threshold value switch and/or at least one analogue-to-digital converter (60, 61), to prescribe the first dynamic range (m) on the basis of a present ambient and/or driving situation, and to at least intermittently process the measurement signals each having the first dynamic range (m) at the same time by means of a processing device (80) having a second dynamic range (n), which is larger in comparison with the first dynamic range (m).

5. Environment sensing apparatus (10) according to Claim 4, **characterized in that** the amplifier device (40, 40, 50, 51) comprises a control device that is configured to adjust the time profile of the delay-dependent gain by means of a control, and/or the amplifier device (40, 41, 50, 51) is configured to adjust the time profile of the delay-dependent gain such that the delay-dependent gain maps a calibration curve (EAW, EAR) estimating an amplitude profile of suitable calibration echo signals onto a time-invariant straight line (EAW1, EAR1) consistent with a constant signal strength value and/or to adjust the time profile of the delay-dependent gain on the basis of a present ambient and/or driving situation and/or on the basis of an operational state, in a particular a soiling state, of at least one receiving acousto-electric transducer (20, 21).

6. Environment sensing apparatus (10) according to either of Claims 4 and 5, configured so as, when a risk of collision, determined by means of at least one measurement signal, is present between the mobility aid, in particular the ego vehicle, and the object (O1, ..., 010), to output a warning to the driver and/or to take action in the mobility aid dynamics, in particular in the vehicle dynamics, and/or to activate at least one means for decreasing consequences of accidents.

7. Vehicle having an environment sensing apparatus (10) according to one of Claims 4 to 6.

## Revendications

1. Procédé pour déterminer la position et/ou le mouvement d'un objet (O1, O2, O3, O4, O5, O6, O7, O8, O9, O10) situé dans l'environnement d'un moyen d'aide au déplacement au moyen de signaux reçus après réflexion sur l'objet (O1, ..., O10), ci-après désignés sous le nom de signaux d'écho, dans lequel les signaux d'écho reçus sont respectivement amplifiés au moyen d'une amplification dépendant du temps de propagation du signal d'écho correspondant,
**caractérisé en ce que** des signaux d'écho amplifiés de plusieurs canaux de mesure (70, 71) sont respectivement convertis en un signal de mesure discrétisé en valeur et/ou dans le temps avec une première gamme dynamique (m) prédéfinie en fonction d'une situation environnante et/ou de conduite existante, et **en ce que** les signaux de mesure présentant respectivement la première gamme dynamique (m) sont projetés sur une seconde gamme dynamique (n) d'un dispositif de traitement (80), qui est supérieure à la première gamme dynamique (m), afin qu'ils soient traités au moins temporairement simultanément au moyen du dispositif de traitement (80).

2. Procédé selon la revendication 1, **caractérisé en ce que** la courbe temporelle de l'amplification dépendant du temps de propagation est réglée au moyen d'une commande et/ou **en ce que** la courbe temporelle de l'amplification dépendant du temps de propagation est réglée de manière à ce qu'une courbe d'étalonnage (EAW, EAR) estimant une courbe d'amplitude de signaux d'écho d'étalonnage appropriés est projetée au moyen de l'amplification dépendant du temps de propagation sur une droite (EAW1, EAR1) invariante dans le temps et correspondant à une valeur d'intensité de signal constante, et/ou **en ce que** la courbe temporelle de l'amplification dépendant du temps de propagation est réglée en fonction d'une situation environnante et/ou de conduite existante et/ou en fonction d'un état fonctionnel, en particulier d'un état de pollution, d'un ou plusieurs transducteurs acousto-électriques de réception (20, 21).

3. Procédé selon l'une des revendications précédentes, **caractérisé en ce qu'**en cas de risque de collision, déterminé au moyen d'au moins un signal de mesure, entre le moyen d'aide au déplacement et l'objet (O1, ..., O10), un avertissement est délivré au conducteur et/ou la dynamique du moyen d'aide au déplacement, en particulier la dynamique du véhicule, est mise en oeuvre, et/ou un ou plusieurs moyens destinés à réduire les conséquences d'un accident sont activés.

4. Dispositif de détection d'environnement (10) pour la détermination de la position et/ou du mouvement d'au moins un objet (O1, ..., O10) dans l'environnement d'un moyen d'aide au déplacement au moyen de signaux reçus après réflexion sur l'objet (O1, ..., O10), désignés ci-après sous le nom de signaux d'écho, dans lequel le dispositif de détection d'environnement (10) comprend un ou plusieurs dispositifs amplificateurs (40, 41, 50, 51) qui sont respectivement conçus pour amplifier les signaux d'écho reçus au moyen d'une amplification dépendant du temps de propagation du signal d'écho correspondant, **caractérisé en ce que** le dispositif de détection d'environnement (10) est conçu pour convertir des signaux d'écho amplifiés de plusieurs canaux de mesure (70, 71), en particulier au moyen d'au moins un commutateur à seuil et/ou d'au moins un convertisseur analogique-numérique (60, 61), en un signal de mesure respectif discrétisé en valeur et/ou dans le temps, avec une première gamme dynamique (m) prédéterminée, pour prédéterminer la première gamme dynamique (m) en fonction d'une situation environnante et/ou de conduite existante, et pour traiter au moins temporairement simultanément les signaux de mesure présentant respectivement la première gamme dynamique (m) au moyen d'un dispositif de traitement (80) présentant une seconde gamme dynamique (n) qui est supérieure à la première gamme dynamique (m).

5. Dispositif de détection d'environnement (10) selon la revendication 4, **caractérisé en ce que** le dispositif amplificateur (40, 41, 50, 51) comprend un dispositif de commande conçu pour régler la courbe temporelle de l'amplification dépendant du temps de propagation au moyen d'une commande et/ou **en ce que** le dispositif amplificateur (40, 40, 50, 51) est conçu pour régler la courbe temporelle de l'amplification dépendant du temps de propagation de manière à ce qu'une projection d'une courbe d'étalonnage (EAW, EAR), estimant une courbe d'amplitude de signaux d'écho d'étalonnage appropriés, soit effectuée sur une droite (EAW1, EAR1) invariante dans le temps et correspondant à une valeur d'intensité de signal constante et/ou pour régler la courbe temporelle de l'amplification en fonction du temps de propagation en fonction d'une situation environnante et/ou de conduite existante et/ou en fonction d'un état fonctionnel, en particulier d'un état de pollution, d'au moins un transducteur acousto-électrique de réception (20, 21).

6. Dispositif de détection d'environnement (10) selon l'une des revendications 4 ou 5, qui est conçu, en cas de risque de collision, déterminé au moyen d'au moins un signal de mesure, entre le moyen d'aide au déplacement, en particulier le véhicule lui-même, et l'objet (O1, ...., O10), pour délivrer un avertissement au conducteur et/ou pour mettre en oeuvre la dynamique du moyen d'aide au déplacement, en particulier la dynamique du véhicule et/ou pour activer au moins un moyen destiné à réduire les conséquences d'un accident.

7. Véhicule comportant un dispositif de détection d'environnement (10) selon l'une des revendications 4 à 6.
